# EUROPEAN PATENT APPLICATION

(11) **EP 0 873 014 A1**
(43) Date of publication of application: **21.10.1998**
(21) Application number: 98400714.6
(22) Date of filing: 26.03.1998
(51) Int. Cl.: H04N 7/20

(54) **Process and system for distributing television signals**

(30) Priority: 14.04.1997 FR 9704554
(71) Applicant: THOMSON multimedia, 92100 Boulogne Billancourt (FR)
(72) Inventor: Harrison, David, 92100 Boulogne Billancourt (FR)
(74) Representative: Ruellan-Lemonnier, Brigitte

(57) **Abstract**

The invention relates to a process for distributing, in at least one building (1), a signal received in a given frequency band, to subscribers, characterized in that it carries out a conversion (9) of the signal into another frequency band, in that it carries out a point multipoint wireless transmission of the converted signal between a communal antenna (11, 20) and subscriber antennas (12) and in that the transmission is performed outside the building (1).

An application is the transmission of signals received by a satellite antenna towards subscribers.

## Description

The invention relates to a process and a system for distributing signals. It relates particularly to the distributing of video services in respect of subscribers located nearby. The utilization of digital or analogue services from satellite links, for domestic applications, is ever growing. These are point-to-multi point links, the signal either being received by a subscriber's individual antenna and then forwarded to the room or rooms of his apartment or house (direct subscriber link), or received by a communal antenna, generally sited on the roof of a property. In the latter case, the signal is generally distributed to the apartments of the subscribers of the communal facility via a distribution network based on coaxial cables which couple various subscribers to the communal antenna. The term "subscriber" is taken here in the broad sense of a user of services.

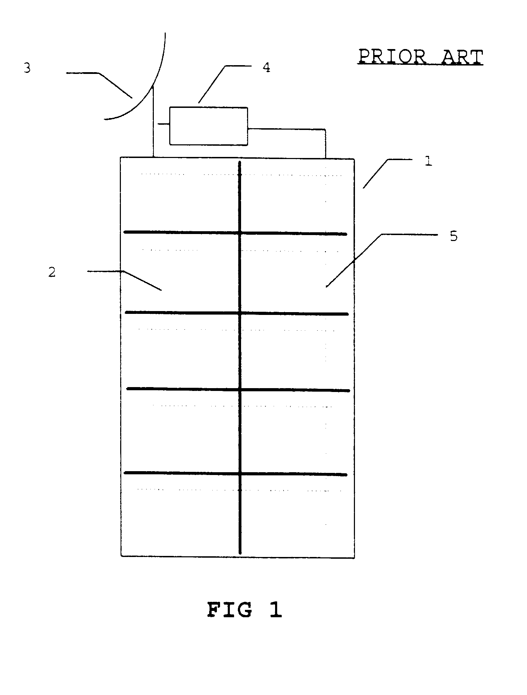

The bandwidth of a satellite system, typically of the order of two gigahertz, is not compatible with the coaxial cable distribution networks already installed in properties for receiving terrestrial or cable television from a communal antenna in the UHF-VHF band. The known solution to this problem, which is that of using an already-existing network, is to transmodulate each digital signal received from a satellite transponder into a signal of narrower band. This digital modulation is for example a quadrature amplitude modulation using a constellation of 54 states (QAM-64). Figure 1 represents a known prior art solution of this kind. The assembly 1 represents a property consisting of apartments 2. A communal satellite antenna 3 installed on the roof of the property is coupled to a receiving device 4 which forwards the processed signal onto the distribution network by coaxial cable 5 which linked the various apartments of the property to a previous UHF/VHF communal receiving antenna. The satellite signal received by the satellite antenna is forwarded to the various subscribers by way of the receiving device and the distribution network.

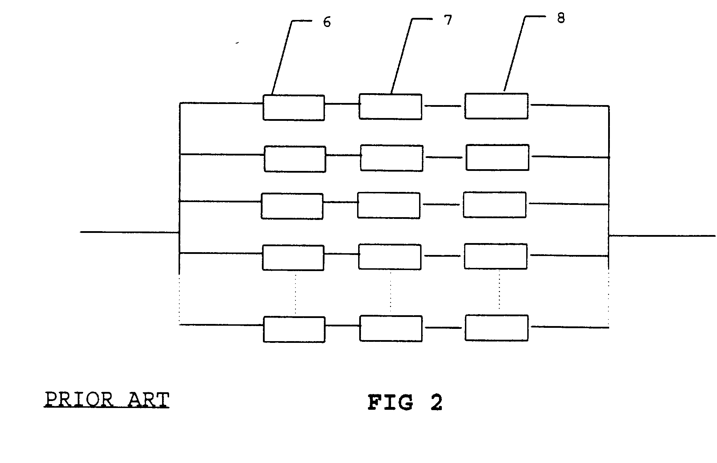

Figure 2 gives a more detailed representation of the receiving device 4. The latter receives the signal originating from the satellite antenna and forwards it, after processing, to the distribution network 5. It is constructed by paralleling a number N of groups of circuits, each group consisting of a satellite receiving circuit 6, a modulation circuit 7 and a circuit for conversion to higher frequency 8. N corresponds to the number of satellite transponders whose digital signals are picked up by the antenna, each transponder representing a specified frequency band. There may be more than 50 signals to be transmodulated, each originating from a specified transponder, for one property.

The satellite receiving circuit 6 comprises a tuner for selecting the transponder frequency, a demodulator and error correction circuits so as to deliver a compressed digital data stream corresponding to this transponder channel. The modulator circuit 7 carries out the transmodulation of the signal originating from the circuit for receiving the digital data which modulates an intermediate frequency signal, for example at the frequency of 35 MHz and this transmodulated signal is then forwarded to the circuit for conversion to higher frequency 8 so as to convert this frequency into the UHF/VHF band. Each of the circuit groups, or N pathways coupled to the distribution cable, delivers a signal of different frequencies, within the UHF/VHF band, each frequency corresponding to a different channel. The signal received by the subscriber can thus be processed by a conventional demodulator, as if it were dealing with cable reception.

Such a solution requires the utilization of complex circuits, each signal originating from a satellite transponder having to be transmodulated individually for distribution over the UHF/VHF down cable. On the other hand, making all the signals received from the satellite or satellites available on the distribution network would rapidly become prohibitively expensive. Information, relating, for example to a guide programme, might not be forwarded if one or more channels on which it is conveyed are not selected for transmodulation. The necessity to process certain items of information, for example the updating of the descriptive data relating to the channels, before forwarding them to the distribution network, may therefore prove to be necessary and create additional constraints in the design of the circuits.

Of course, it would be conceivable, in order to solve the problem, to replace the existing cabled network with a new coaxial cable network having the required bandwidth of the order of 2 GHz. However, this solution is very expensive and involves considerable nuisance during installation.

The UHF/VHF type cable links connecting subscribers to a communal antenna, in a property, usually employ repeaters which make these links unidirectional. These repeaters are made necessary in order to amplify the signals due to the loss engendered by dividing the signal between the subscribers. Thus, no return channel is made possible by the network of down cables for the UHF/VHF signals, as installed, when a solution such as a transmodulation of satellite signals is employed.

It is also known to forward digital data via wireless links, for example the local area network forwarding system known as a Wireless LAN (Local Area Network). The data are transmitted at a frequency at around 2.5 GHz between the workstations connected in this way to the local area network. However, these links are limited, in range, to a distance from 50 to 100 m around. They are subject to interferences of the multipaths due to reflections off walls etc., they are also subject to attenuations due to partition walls and other obstacles, thus making installation awkward or the links unreliable.

The aim of the invention is to overcome the aforementioned drawbacks.

The object of the invention is a process for distributing, in at least one building, a signal received in a given frequency band, to subscribers, characterized in that it carries out a conversion of the digital signal into another frequency band, in that it carries out a point multipoint wireless transmission of the converted signal between a communal antenna and subscriber antennas and in that the transmission is performed outside the building.

The object of the invention is also a system for distributing a signal received by a satellite antenna within at least one building, characterized in that a communal antenna and subscriber antennas are placed outside the building, in that it comprises a frequency transposition circuit which carries out at least one frequency conversion of the signal received from the satellite antenna and from its LNB block, an amplifier of the signal thus converted for feeding the communal antenna.

Thus, the signals received by the antenna on the roof of the property are distributed to the subscriber terminals via a wireless link. This is carried out by way of a frequency transposition of the whole of the satellite band received into a higher frequency band and through the use, in the subscriber's premises, of receiving antennas of very small size.

The main advantage of the invention is that it provides a low-cost solution for the distribution of satellite signals to apartments. The distribution device, simple, that is to say with no wire link, is also very discreet and inexpensive. It is hardly any encumbrance to the subscriber, the antennas being of very small size, for example a few centimetres. The advantage of the invention is also that it makes it possible to produce a return lin without being necessary to replace the existing cabling of the property.

Other features and advantages of the invention will emerge clearly in the following description given by way of non-limiting examples, and provided in conjunction with the appended figures which represent:
- Figure 1, the forwarding of satellite signals within a property according to the prior art,
- Figure 2, the processing device for forwarding satellite signals to a cabled network according to the prior art,
- Figure 3, the distribution of satellite signals within a property according to the invention,
- Figure 4, a processing device for distributing satellite signals to the subscribers according to the invention,
- Figure 5, a device for receiving satellite signals at the subscriber's premises according to the invention.

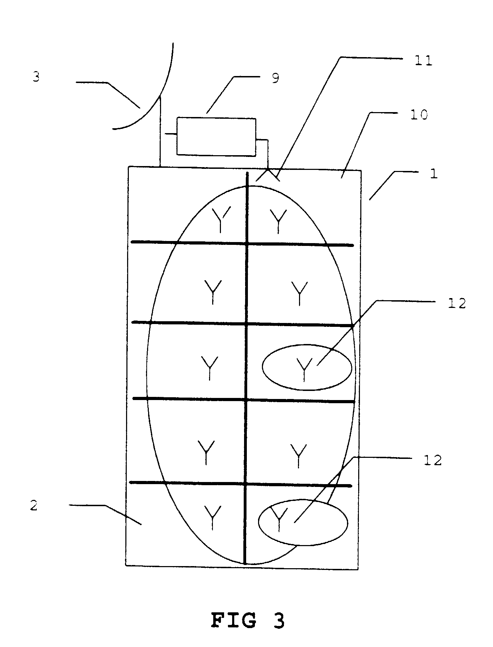

Figure 3 represents a schematic description of the distribution of the satellite signals received by a communal receiving antenna on the roof of a property.

The same numbering is used for the elements which are identical to those of Figure 1. The signals received by the antenna 3 are forwarded to a frequency transposition circuit 9 whose output is linked to a transmitting antenna 11. These signals are picked up at each apartment 2 by a receiving satellite antenna 12 installed for example on the facade of the property at apartment level.

The frequency transposition circuit 9 receives the satellite signals originating from the antenna 3 and converts them from the satellite intermediate frequency band to the 40.5 GHz-42.5 GHz band in a manner detailed later. These signals are forwarded to a transmitting antenna 11 so as to be picked up by various receiving antennas of the subscribers 12. On account of the very small communication distances, the transmitting power delivered by the frequency transposition circuit may be of small value, typically 1mW per transponder signal to be transmitted.

In an exemplary set-up, the transmitting antenna and the various receiving antennas are fastened along the facade of the property, the transmitting antenna directed downwards towards the bottom of the property and the receiving antennas pointing upwards. The required condition is that, as a function of the radiation pattern of the transmitting and receiving antennas (of their respective gain), the power density of the signal received by the antennas 12 should be compatible with the sensitivity threshold of the receivers linked to these antennas.

The forwarding frequencies are for example around 24 GHz, 40 GHz or 60 GHz, precisely where the available frequency domain makes it possible to occupy a frequency band of approximately 2 GHz.

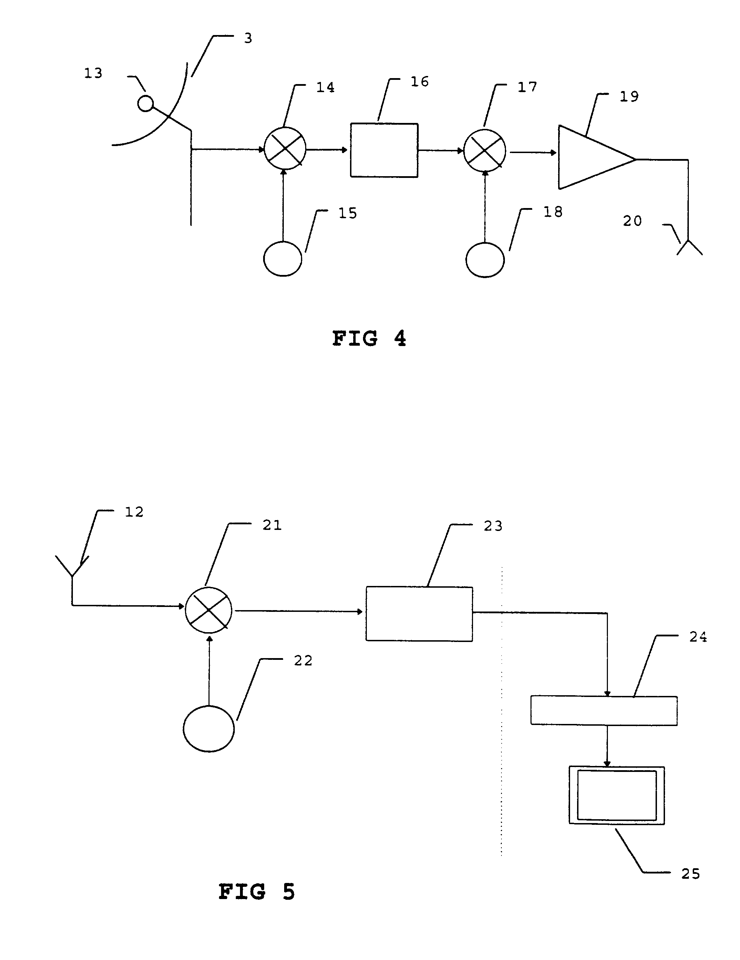

Figure 4 gives a detailed description of the frequency transposition circuit employed by the distribution system according to the invention.

The signals received from the satellite by a satellite antenna 3 are converted by way of a low-noise converter block 13 (generally an integral part of the antenna) or LNB standing for Low Noise Blockdownconverter. These signals are then forwarded to the input of the frequency transposition circuit 9 (not represented as such in Figure 4) which is the first input of a mixer 14, the second input of this mixer being fed from a local oscillator 15. The output of the mixer Is linked, by way of a bandpass filter 16, to a first input of a second mixer 17 whose second input originates from a second local oscillator 18. The output of the mixer is linked to a power amplifier 19 which forwards the amplified signal to a transmitting antenna 20. The output of the power amplifier 19 is the output of the frequency transposition circuit 9 which therefore groups together the described circuits 14 to 19.

The signal received by the antenna, for example in the 10.7-12.7 GHz frequency band, is converted a first time into the 950-2150 MHz intermediate frequency band by way of the low-noise converter block 13. The signal is converted a second time around the 12 GHz frequency by means of the mixer 14, the local oscillator 15 delivering to it, on its second input, a signal at the 11 GHz frequency. The signal thus obtained at the intermediate frequency is next filtered by the filter 16 which eliminates the image frequency, and then forwarded to a second mixer 17. This mixer receives, on the second input, the signal from the local oscillator 18 at the frequency of 27.5 GHz and converts the incoming signal into the 40.5-42.5 GHz frequency band. It is this signal that is amplified by the amplifier 19 so as to feed the antenna 20 with sufficient power to be picked up by all the subscribers in the property. On account of the low level of power required per transponder channel, a single 40 GHz amplifier is generally sufficient to amplify all the signals forwarded by the satellite transponders and picked up by the satellite antenna 3.

The distensions of the forwarding antenna 20 are extremely small, typically a diameter of 3 cm, on account of the high transmission frequencies and the same holds true for the subscriber antennas. The radiation pattern of the antenna is chosen so as to cover the facade of the property and minimize interference with the distribution systems of other properties. The shape of the pattern is for example chosen so as to provide an antenna beam width of 60 to 90 degrees on one axis, along the width of the property, and 5 to 20 degrees on the other axis.

The power forwarded at the aerials shall be limited to a predefined value so as to allow a choice of frequencies if the standards and regulations for the use of frequencies in the radio spectrum permit unrestricted use of frequencies for powers below stipulated values, when such standards and permission exist.

Figure 5 represents a diagram of the receiving circuits at the subscriber's premises.

The signal forwarded by the common transmitting antenna 20 is received by the subscriber antenna 12 and is then forwarded to a first input of a sub-harmonic mixer 21, the second input of this mixer being fed from a local oscillator 22. The converted signal is next forwarded to a low-noise converter block 23 and then to a standard satellite receiver 24 which feeds the television 25.

The subscriber antenna pointing towards the roof of the property picks up the signals in the 40 GHz frequency band. These signals are received by the sub-harmonic mixer 21 which is both a multiplier and a mixer. Thus, the signal received on its second input and originating from the local oscillator at the 14.9 GHz frequency firstly has its frequency multiplied by two before being mixed with the incoming signal received on the first input. By using this type of mixer it is possible to employ a local oscillator of lower frequency and hence of lesser cost. The output signal from the mixer is thus converted Into the satellite frequency band around 11 GHz and this signal can be forwarded to a standard low-noise converter block (LNB) 23 of the type employed behind the satellite antenna. The signal is next processed by a standard satellite receiver (or satellite demodulator) 24.

This installation can easily be supplemented so as to produce a return link, interactivity being an important characteristic in the provision of services to the subscriber. Thus, a transmission pathway, on the subscriber's side, which carries out the frequency conversion into the 4C GHz band and the forwarding of the signal via a duplexer placed behind the antenna 12 enables data to be dispatched by each subscriber. These data are picked by the communal antenna 20 which then, likewise by way of a duplexer, a receiving circuit which carries out a frequency conversion into the satellite band and a transmitting circuit which drives a second duplexer placed behind the antenna 3, makes it possible to send these data back to the satellite.

Similarly, and in order to perfect the compatibility with the satellite transmission capacity, which can transmit with a bandwidth of 2 GHz in both polarizations, the described reception channel can be split so as to receive the satellite signals in the other polarization. The antennas 20 and 12 are then dual-polarity antennas and the polarity switch of the subscriber antenna is controlled for example, in a known manner, by the subscriber receiver.

The described device relates to the reception of satellite signals. This invention can also be employed when the distribution of signals uses urban cabled network, in the case where the properties to be served are not equipped with a network adapted for cable distribution. The cable inlet at the base of the property is then linked to a device of the type described in Figure 4, the signals originating from the LNB block of the satellite antenna here being replaced by the signals originating from the cable, with the necessary interfaces for adapting these signals. The UHF link is then, for example, of the up type, the transmitting antenna 20 being placed at the bottom of the property.

The invention can also be employed in the forwarding of data, for example over a local area network, from one storey of a building to another. Local area networks with wireless transmission are limited in range, of the order of some 20 metres, and the process and device which are described can be used for the forwarding and exchanging, at larger distance, of the data flowing over the networks whilst circumventing the kind of attenuation or interference problems usually encountered with the existing devices.

Quite obviously, the invention is not limited to the receiving of signals originating from a single satellite. Signals originating from a satellite having a different polarization or from other satellites would be processed in the same way employing a second high frequency conversion chain, all the signals being transmitted to the subscribers by the same antenna 20.

## Claims

1. Process for distributing, in at least one building (1), a signal received in a given frequency band, to subscribers, characterized in that it carries out a conversion (9) of the signal into another frequency band, in that it carries out a point multipoint wireless transmission of the converted signal between a communal antenna (11, 20) and subscriber antennas (12) and in that the transmission is performed outside the building (1).

2. Process according to Claim 1, characterized in that the signal to be distributed is that originating from a satellite antenna (3) which is installed on the roof of a property and receives satellite signals and in that the signal is converted into a frequency band higher than that of the satellite signal for the transmission of signals.

3. Process according to Claim 1, characterized in that the signal to be distributed is that from a local area network and in that this signal is transmitted from one storey of the building to another.

4. Process according to Claim 1, 2 or 3, characterized in that the transmission is bidirectional by using antennas capable of operating in transmission and reception modes.

5. Process according to Claim 1, 2 or 3, characterized in that the signals are transmitted with orthogonal polarization.

6. Process according to one of the preceding claims, characterized in that the transmission frequency is chosen around the frequencies of 24 GHz, 40 GHz or 60 GHz.

7. System for distributing a signal received by a satellite antenna within at least one building (1), characterized in that a communal antenna (20) and subscriber antennas (12) are placed outside the building, in that it comprises a frequency transposition circuit (9) which carries out at least one frequency conversion (14, 15; 17, 18) of the signal received from the satellite antenna and from its LNB block (3, 13), an amplifier (19) of the signal thus converted for feeding the communal antenna (20).

8. Distribution system according to Claim 7, characterized in that the transmitting antenna (20) and the receiving antennas (12) are dual-polarization antennas.

9. Distribution system according to Claim 7 or 8, characterized in that the transmitting power forwarded by the antennas is limited to a predetermined value.
